# EUROPEAN PATENT SPECIFICATION

(11) **EP 2 348 147 B1**
(45) Date of publication and mention of the grant of the patent: **18.10.2017**
(21) Application number: 11151162.2
(22) Date of filing: 17.01.2011
(51) Int. Cl.: D04H 1/4382, D04H 1/498, D04H 1/46, A47L 13/20

(54) **Process of making a non-woven cleaning cloth**
Verfahren zur Herstellung eines Reinigungsvliesstoffstuchs
Procédé de fabrication d'un chiffon de nettoyage non tissé

(30) Priority: 21.01.2010 IT MI20100067
(43) Date of publication of application: 27.07.2011
(73) Proprietor: Maranghi, Marco, 59100 Prato (IT); Parenti, Paolo, 59015 Comeana (Prato) (IT)
(72) Inventor: Maranghi, Marco, 59100 Prato (IT); Parenti, Paolo, 59015 Comeana (Prato) (IT)
(74) Representative: Petruzziello, Aldo

(56) References cited:
- EP-A1- 1 359 241
- WO-A1-2007/101518
- US-A- 4 276 345

## Description

The present invention relates to the use of a non-woven fabric having a surface covered with microfiber for producing cleaning devices, such as mops, conventional floor cloths, cloths for glass and for any other type of surface.

In particular, the present invention relates to the use in the cleaning sector of "double layer" composite textile materials formed by a microfiber surface layer and a non-woven fabric supporting layer.

In the cleaning sector non-woven fabric materials completely in microfiber are particularly appreciated, as they are very effective in the removal of dirt, due to the fineness of the fibers of which they are composed, normally less than 1 dtex. To obtain a thickness that is sufficient to allow easy handling for use as cleaning cloths, or to produce strip mops, the weight per square meter of the material must be greatly increased, thus increasing costs due to the quantity of fibers used. Moreover, increasing the weight of the product in this way leads to high production costs, as to obtain cohesion of the fibers inside the layer of non-woven fabric high pressure water jets are required during the hydroentanglement process generally used to form non-woven fabrics of microfiber.

The use of microfiber has also recently be introduced in the manufacture of cloths formed by flexible strips defined as mops but more commonly known with the trade name "mocio®". In these mops a small surface portion of the outermost strips is made of microfiber, while the remaining part is made of fibers having deniers greater than 1 dtex (macrofibers). These materials are produced by thermally bonding a microfiber layer with a macrofiber layer, and subsequently by optionally calendering the double layer thus obtained, in which each layer has been prepared previously according to respective prior art techniques. However, this thermal process is costly from the viewpoint of energy and due to the use of hot melt glues which are required to allow adhesion of the two different layers. Moreover, bonding of the two different layers by hot rolling also causes a decrease in the cleaning efficacy of the microfiber as the heat bonds the filaments of the microfiber together, decreasing their number and consequently the cleaning capacity of the microfiber layer.

EP 1359241 (A1) discloses a multi-layer, non-woven fabric material (1), comprising a support layer (2) and a cleaning layer (3) having a different fibre density suitable to confer to the layer (2) the capacity of retaining a cleaning fluid and of giving mechanical strength to the material (1) and to the layer (3) an action of controlled release of the fluid coming from the support layer (2), the support layer (2) and the cleaning layer (3) being bonded by hydroentangling.

WO 2007101518 discloses a mop head (1) for a mop (2), comprising cleaning strips (5) having a substantially wave-like three-dimensional structure (7), external strips of said strips (5) consisting of a non woven layer (6.1) on which a microfiber is laminated.

The following documents belong also to the prior art: US 6 573 204 B1, FR 2 533 500 A1, JP 2001 190469 A and WO2008/029307 A2.

The object of the present invention is to find a textile material to be used in the cleaning sector capable of overcoming the aforesaid drawbacks of prior art and with a high cleaning power comparable to microfiber, high mechanical consistency and integrity even at low densities, with lower costs with respect to microfiber so that it can be used to produce any type of cleaning device.

A further object is that of finding a material of this type that has improved cleaning and abrasive power, also in the case of microfiber with low weight per square meter.

Yet another object of the present invention is that of using a material of this type that is practical and inexpensive.

The present invention relates to the use, in the preparation of cleaning devices, of a non-woven fabric textile material with at least two layers (hereinafter also defined as "double layer", one of which is made of microfiber, wherein said microfiber layer is supported by non-woven fabric layer in macrofiber, and wherein longitudinal lines alternated with embossments or micro-embossments are present on the microfiber layer.

"Cleaning devices" are intended herein as mops, sponges, conventional floor cloths, cloths for glass, and for any other type of surface. The term "microfiber" is intended as defining very fine fibers, generally synthetic, having a count equal to or less than 1 dtex (UNI 10714-1999), i.e. ten thousand meters of a fiber weigh one gram, while the term "macrofiber" is intended herein as fibers with a count greater than 1 dtex.

The aforesaid double-layer textile material is obtained by carrying out a first step of needle punching a mat formed by at least one layer of carded web of macrofibers and at least one layer of carded web of microfibers, and a subsequent treating the needle-punched mat with spunlace/hydroentangled technology with high pressure water jets to open the microfibers into filaments, where the needle-punching and subsequent treatment are performed and applied from the same side in microfiber, i.e. on the free surface of the microfiber layer of the mat.

The macrofiber layer to be used in the needle-punching step can be pre-needled, needle-punched or even only constituted by a plurality of crosslapped or carded webs. The effect of the use of the macrofiber layer is achieved provided that a microfiber web layer is deposited over said macrofiber layer and that subsequent needle-punching is performed only on this microfiber side.

Both the mechanical needle-punching step and the hydro entanglement step are performed according to prior art. In particular, for hydroentanglement see for example US 3,485,706, or the description of patent application EP 135924.

In practice, the first mechanical needle-punching step produces a non-woven fabric, which is used as base for application to one of its two surfaces of a splittable microfiber web; then, always with the prior art mechanical needle-punching technique, this surface web of fibers is entangled by taking, through mechanical action, the fibrils of the microfiber inside the lower layer of non-woven macrofibers so as to cover one of the two surfaces with microfiber and to bond the two different layers of non-woven fabric though entanglement of the fibrils of the surface layer with those of the layer below. In this manner, the fibril is given its direction by the needle that conveys it inside the lower supporting layer, without contaminating the microfiber layer with less prestigious macrofibers, which instead would occur in the case of bonding only using mechanical needle-punching, as in the art needle-punching is also performed on the lower side of the mat.

Subsequent to this operation, surface bonding is applied using the prior art technique of hydro entanglement, again only on one side on which the microfibers have been deposited so as to entangle the fibres of the surface and, in case of microfibers, also to split the fibrils so as to produce microfibers as a result of hydroentanglement.

The high pressure hydroentangling step is carried out by means of a device with water jets that apply a pressure generally in the order of 80/400 bar on the free surface of the upper microfiber layer of the mat, along the lines of the nozzles which are distributed in various ways (mutually adjacent and in contact with one another, or suitable spaced apart so as to create different paths). Said lines represent bonding lines along which the microfibers are bonded to a greater degree with the macrofibers below. In this bonding operation final entanglement of the microfibers occurs, with formation of the cleaning layer fixed to the supporting layer at said longitudinal bonding lines, preferably spaced apart from one another so that they are alternated. Along said lines the fibres are more compressed due to the previous water jet and therefore, in the case of longitudinal lines spaced apart, the microfiber surface has embossments or micro-embossments alternated with said lines. Subsequently, the bonded product is air dried and wound on a reel or can be coated with resins, preferably acrylic resins, on the macrofiber side (i.e, on the free surface of the macrofiber layer) to obtain fabrics with one side similar to chamois leather, which are very effective for cleaning glass.

The non-woven fabric thus produced can be used as is, or can be subsequently dyed and/or coated on both sides and/or printed on one or other side, to produce dry and/or moistened cloths for cleaning, to produce mops or for use in the medical sector, where fabrics with different densities and compositions are required, and in all those applications that require the efficacy of microfiber which, due to the physical structure of the fibers of which it is composed, removes dirt very effectively. The macrofibers are used as fibers for the lower supporting layer, with the same or different deniers, are made of viscose, polypropylene, nylon, rayon, cellulose, mixed viscose and polyester, cotton. Alternatively, it is possible to use fibers deriving from regenerated or recycled materials, for example 100% recycled PET, or from a mixture of 70% regenerated cellulose fibres and 30% recycled PET fibres.

A preferred composition of macrofibers contains 70% of viscose and 30% of polyester, or a 50/50 mixture of viscose/polyester.

The unit weight (basis weight) of the macrofiber layer can vary between 100 g/m² and 400 g/m², preferably greater than 100 g/m², for example comprised between 180 and 280 g/m², more preferably comprised between 200 and 250 g/m².

The fibers of the microfiber layer are preferably splittable fibers formed, for example, by polyester/polyamide, and having deniers of around 1-2 Dtex before being split which are capable of generating microfilaments (multi filaments) having deniers below 1 Dtex. This microfiber can have a unit weight similar to that of the macrofiber layer or lower, preferably lower, for example comprised between 40-70 g/m².

A preferred embodiment of the textile material used in the present invention provides an upper microfiber layer with unit weight comprised between 60-70 g/m² and a lower non-woven fabric macrofiber layer with unit weight comprised between 200 and 250 g/m².

The total thickness of the textile material and/or of its single layers is not binding for the purposes of the present invention and depends on the final use of the material. For example to produce mops, a non-woven fabric with total thickness varying between 1 mm and 3 mm and with a thickness of the microfiber layer comprised between 0.3 mm and 1 mm can be used.

The use of the material of the present invention is particularly advantageous as a smaller quantity of microfiber is used with respect to known bonded materials obtained by hot rolling, without however sacrificing the mechanical consistency of the material which is guaranteed by the macrofiber layer. In particular, as only the filaments on the surface of the microfiber layer "work" against the dirt, in the material used in the present invention it is also possible to use a microfiber having a low unit weight, for example 20 g/m², while guaranteeing mechanical strength and consistency of the material due to the macrofiber supporting layer which can be used with a high unit weight, for example greater than 100 g/m², as it is less prestigious than the microfiber.

Moreover, any presence of embossments on the microfiber surface provides an improved cleaning power with respect to conventional microfiber materials as said surface is even rougher and more abrasive, with a "spatula" effect that allows more effective removal of dirt and grease with respect to conventional microfiber cloths.

## Claims

1. Process for making textiles comprising a "double layer" non-woven fabric having a "spatula" effect,
said process comprising the step of preparing said "double layer" non-woven fabric which is formed of
a cleaning layer which consists of microfiber having a unit weight equal to or less than 100 g/m², and
a macrofiber supporting layer having a basis weight from 100 g/m² to 400 g/m², said layer being bonded to said microfiber layer by means of a needle-punching and a subsequent spunlacing/hydroentangling, each of them being applied on the free surface of the microfiber layer,
said macrofiber layer having fibrils of the microfiber inside said layer of macrofibers,
said macrofiber layer being at least one carded web, the fibers of the macrofiber layer being selected from the group consisting of viscose, polypropylene, nylon, rayon, cellulose, mixed viscose and polyester, cotton,
wherein longitudinal lines alternated with embossments or micro-embossments are present on the microfiber layer surface.

2. Process according to claim 1, wherein the carded web of said macrofiber layer is pre-needled, needle-punched or even only constituted by a plurality of cross-lapped or carded webs.

3. Process according to any one of the preceding claims, wherein the free surface of the macrofiber layer is coated with resins.

4. Process according to claim 3, wherein the free surface of the macrofiber layer is coated with acrylic resins.

5. Process according to any one of the preceding claims, wherein the fibers of the macrofiber layer are formed by 70% of viscose and 30% of polyester, or by a 50/50 mixture of viscose/polyester; or they are formed by regenerated or recycled materials, for example 100% recycled PET, a mixture of 70% regenerated cellulose fibres and 30% recycled PET fibres.

6. Process according to any one of the preceding claims, wherein the microfibers are splittable fibres constituted by polyester/polyamide.

7. Process according to any one of the preceding claims, wherein the basis weight of macrofiber layer ranges between 200 and 250 g/m².

8. Process according to any one of claims 1-7, wherein the textiles comprising the "double layer" non-woven fabric as defined in claims 1 to 7, can be produced in form of mops, conventional floor cleaning cloths, cloths for cleaning glass and for any other type of surface, sponges, dry and/or moistened cloths for cleaning.

9. Process according to claim 8, wherein the dry and/or moistened cloths for cleaning can be for use in the medical sector.

## Patentansprüche

1. Verfahren zur Herstellung von Textilien, umfassend einen "doppellagigen" Vliesstoff mit einem "Spatel"-Effekt,
wobei das Verfahren den Schritt des Vorbereitens des "doppellagigen" Vliesstoffes umfasst, der gebildet ist aus
einer Reinigungsschicht, die aus Mikrofaser mit einem Einheitsgewicht von gleich oder weniger 100 g/m² besteht, und
einer Makrofaserträgerschicht mit einem Basisgewicht von 100 g/m² bis 400 g/m², wobei die Schicht mittels Nadelfilzen und anschließende Wasserstrahlverfestigung an die Mikrofaserschicht gebunden ist, wobei jede davon auf der freien Oberfläche der Mikrofaserschicht aufgebracht ist,
wobei die Makrofaserschicht Fasern der Mikrofaser im Inneren der Schicht aus Makrofasern aufweist,
wobei es sich bei der Makrofaserschicht um mindestens eine kardierte Bahn handelt, wobei die Fasern der Makrofaserschicht aus der Gruppe bestehend aus Viskose, Polypropylen, Nylon, Rayon, Cellulose, einem Viskose- und Polyestergemisch, Baumwolle ausgewählt sind,
wobei auf der Oberfläche der Mikrofaserschicht Längslinien vorhanden sind, die sich mit Prägungen oder Mikroprägungen abwechseln.

2. Verfahren nach Anspruch 1, wobei die kardierte Bahn der Makrofaserschicht vorgefilzt ist, nadelgefilzt ist oder sogar nur aus mehreren kreuzgelegten oder kardierten Bahnen besteht.

3. Verfahren nach einem der vorhergehenden Ansprüche, wobei die freie Oberfläche der Makrofaserschicht mit Harzen beschichtet ist.

4. Verfahren nach Anspruch 3, wobei die freie Oberfläche der Makrofaserschicht mit Acrylharzen beschichtet ist.

5. Verfahren nach einem der vorhergehenden Ansprüche, wobei die Fasern der Makrofaserschicht durch 70 % Viskose und 30 % Polyester gebildet sind oder durch ein 50/50-Gemisch aus Viskose/Polyester; oder sie sind aus regenerierten oder recycelten Materialien gebildet, beispielsweise aus 100 % recyceltem PET, einem Gemisch aus 70 % regenerierten Cellulosefasern und 30 % recycelten PET-Fasern.

6. Verfahren nach einem der vorhergehenden Ansprüche, wobei es sich bei den Mikrofasern um spaltbare Fasern handelt, die aus Polyester/Polyamid bestehen.

7. Verfahren nach einem der vorhergehenden Ansprüche, wobei das Basisgewicht der Makrofaserschicht im Bereich zwischen 200 und 250 g/m² liegt.

8. Verfahren nach einem der Ansprüche 1 bis 7, wobei die Textilien umfassend den "doppellagigen" Vliesstoff nach der Definition in Anspruch 1 bis 7 in Form von Mopps, herkömmlichen Fußbodenreinigungstüchern, Tüchern zur Reinigung von Glas und jeder anderen Art von Fläche, Schwämmen, trockenen und/oder feuchten Reinigungstüchern hergestellt werden können.

9. Verfahren nach Anspruch 8, wobei die trockenen und/oder feuchten Reinigungstücher zur Verwendung im medizinischen Bereich bestimmt sein können.

## Revendications

1. Processus pour préparer les textiles comprenant un tissu non-tissé à « double couche » possédant un effet « de spatule »,
ledit processus comprenant l'étape consistant préparer ledit issus non-tissé à « double couche » qui est formé
d'une couche de nettoyage qui consiste en des microfibres possédant un poids unitaire inférieur ou égal à 100 g/m² ; et
d'une couche de support de macro fibres possédant un poids de base compris entre 100 g/m² et 400 g/m², ladite couche étant liée à ladite couche de microfibres par aiguilletage et par entrelacement/hydroenchevêtrement, chacun d'eux étant appliqué sur la surface libre de la couche de microfibres,
ladite couche de macrofibres possédant des fibrilles de la microfibre à l'intérieur de ladite couche de macrofibres,
ladite couche de macrofibres étant au moins un voile cardé, les fibres de la couche de macrofibres étant choisies parmi le groupe constitué de la viscose, du polypropylène, du nylon, du rayon, de la cellulose, de la viscose et du polyester mélangés, du coton,
dans lequel les lignes longitudinales alternées avec des gaufrage ou des micro-gaufrages sont présents sur la surface de la couche de micro fibres.

2. Processus selon la revendication 1, dans lequel le voile cardé de ladite couche de macrofibres est pré-aiguilleté, entrelacé ou même seulement constitué d'une pluralité de voiles à couche croisée ou cardés.

3. Processus selon l'une quelconque des revendications précédentes, dans lequel la surface libre de la couche de macrofibres est recouverte de résines.

4. Processus selon la revendication 1, dans lequel la surface libre de la couche de macrofibres est recouverte de résines acryliques.

5. Processus selon l'une quelconque des revendications précédentes, dans lequel les fibres de la couche de macrofibres sont formées à 70 % de viscose et à 30 % de polyester, ou d'un mélange 50/50 de viscose/polyester ; ou elles sont formées par des matériaux régénérés ou recyclés, par exemple du PET recyclé à 100 %, un mélange de fibres de cellulose régénérées à 70 % et de fibre de PET recyclées à 30 %.

6. Processus selon l'une quelconque des revendications précédentes, dans lequel les microfibres sont des fibres fractionnables constituées par du polyester/polyamide.

7. Processus selon l'une quelconque des revendications précédentes, dans lequel le poids de base de la couche de macro fibres varie entre 200 et 250 g/m².

8. Processus selon l'une quelconque des revendications 1 à 7, dans lequel les textiles comprenant le tissu non-tissé à « double couche » selon l'une quelconque des revendications 1 à 7, peuvent être produits sous forme de serpillières, de chiffons de nettoyage de sol conventionnels, de chiffons pour nettoyer le verre et pour nettoyer tout autre type de surface, d'éponges, de chiffons secs et/ou humides destinés au nettoyage.

9. Processus selon la revendication 8, dans lequel les chiffons secs et/humides destinés au nettoyage peuvent être utilisés dans le secteur médical.
